(19) Europäisches Patentamt
European Patent Office
Office européen des brevets

(11) Veröffentlichungsnummer : **0 221 316 B1**

# (12) EUROPÄISCHE PATENTSCHRIFT

(45) Veröffentlichungstag der Patentschrift : 03.01.90

(51) Int. Cl.[5] : C 08 G 63/18

(21) Anmeldenummer : 86113071.4

(22) Anmeldetag : 23.09.86

## (54) Thermotrope aromatische Polyester mit hoher Wärmeformbeständigkeit und hervorragenden mechanischen Eigenschaften, Verfahren zu ihrer Herstellung und ihre Verwendung zur Herstellung von Formkörpern, Filamenten, Fasern und Folien.

(30) Priorität : 04.10.85 DE 3535452

(43) Veröffentlichungstag der Anmeldung : 13.05.87 Patentblatt 87/20

(45) Bekanntmachung des Hinweises auf die Patenterteilung : 03.01.90 Patentblatt 90/01

(84) Benannte Vertragsstaaten : DE FR GB IT

(56) Entgegenhaltungen :
GB-A- 2 030 158
US-A- 4 500 699
CHEMICAL ABSTRACTS, Band 102, Nr. 4, 28. Januar 1985, Seite 83, Zusammenfassung Nr. 26236f, Columbus, Ohio, US; & JP-A-59 126 431 (AGENCY OF INDUSTRIAL SCIENCES AND TECHNOLOGY) 21-07-1984

(73) Patentinhaber : BAYER AG
D-5090 Leverkusen 1 Bayerwerk (DE)

(72) Erfinder : Eckhardt, Volker, Dr.
Bodelschwinghstrasse 14
D-4150 Krefeld (DE)
Erfinder : Dicke, Hans-Rudolf, Dr.
Bodelschwinghstrasse 16
D-4150 Krefeld (DE)
Erfinder : Hammerschmidt, Erich, Dr.
Kicke 19
D-5060 Bergisch-Gladbach (DE)
Erfinder : Freitag, Dieter, Dr.
Hasenheide 10
D-4150 Krefeld (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 221 316 B1

Jouve, 18, rue St-Denis, 75001 Paris, France

## Beschreibung

Die Erfindung betrifft hochmolekulare thermotrope vollaromatische Polyester mit hoher Wärmeformbeständigkeit, hoher Steifigkeit und Festigkeit sowie niedriger Verarbeitungstemperatur, ein Verfahren zu ihrer Herstellung und ihre Verwendung zur Herstellung von Formkörpern, Filamenten, Fasern und Folien.

Als « thermotrop » bezeichnet man solche Substanzen, die flüssig-kristalline Schmelzen bilden. Thermotrope Polykondensate sind hinreichend bekannt, vgl, z. B.

F. E. McFarlane et al., Liquid Crystal Polymers 11, Contemporary Topics in Polymer Science, Vol. 2, Plenum Publishing Corporation, 1977 ;

W. J. Jackson und H. F. Kuhfuss, J. Polymer Science, Polymer Chem. Ed. 14, 2042 (1976) ;

W. C. Wooten et al. in A. Ciferri « Ultra-high Modulus Polymers », Applied Science Publ., London 1979, S. 362 f. ;

A. Blumstein et al., « Liquid Crystalline Order in Polymers », Academic Press 1978 ;

J. Preston, Angew. Makromol. Chem. 109/110, S. 1-19 (1982) ;

A. Ciferri, W. R. Krigbaum, R. B. Meyer « Polymer Liquid Crystals », Academic Press, New York, 1982 ;

EP 1185, 1340, 8855, 11 640, 15 856, 17 310, 18 145, 18 709, 22 344, 44 205, 49 615 ;

US 3 991 013, 3 991 014, 4 066 620, 4 067 852, 4 083 829, 4 107 143, 4 226 970, 4 232 143, 4 232 144, 4 245 082, 4 269 965, 4 335 232, 4 381 389, 4 399 270, 4 398 015, 4 447 592 ;

JP 59/126 431 ;

WO 79/797, 79/1030/79/1040.

Der flüssig-kristalline Zustand von Polymerschmelzen läßt sich mit Hilfe eines Polarisationsmikroskops untersuchen : Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 μm.

Die Untersuchung der Polykondensate erfolgte nach dem Aufschmelzen der Proben bei Temperaturen zwischen 280 und 400 °C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssig-kristallin eingestuft.

Die flüssig-kristallinen Polykondensate zeigen in der Meßanordnung Werte über 1 Skamenteil, meist Werte von 3 bis 90 Skalenteilen. Für amorphe Schmelzen, z. B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z. B. bei G. W. Gray und P. A. Windsor, « Plastic Crystals, Physico-Chemical Properties and Methods of Investigation », insbesondere Chapter 3, John Wiley und Sons, New York, Sydney, Toronto 1974, beschrieben ist.

Für viele Anwendungen, z. B. in der Elektro- und der Fahrzeugindustrie, werden farbhelle thermoplastisch leicht verarbeitbare Werkstoffe mit hoher Festigkeit und Steifigkeit benötigt, die auch noch bei höheren Temperaturen einsetzbar sind. Die bisher bekannt gewordenen thermotropen Polyester werden diesen Anforderungen jedoch nicht in allen Punkten gerecht.

Die US-PS 4 500 699 beschreibt thermotrope Polyester aus 3,4'-Benzophenondicarbonsäure, Terephthalsäure und Methyl- bzw. Chlorhydrochinon. Diese Polyester erfüllen zwar teilweise die gestellten Anforderungen, besitzen jedoch eine unbefriedigende thermische Stabilität. Bei den zur Herstellung bzw. zur Verarbeitung erforderlichen Temperaturen ergeben sich Verfärbungen, die die Anwendbarkeit stark einschränken.

Aufgabe der vorliegenden Erfindung war es daher, thermisch stabile, thermotrope vollaromatische Polyester mit einer bisher nicht bekannten Kombination von guter Verarbeitbarkeit, hoher Wärmeformbeständigkeit und sehr hoher Festigkeit und Steifigkeit bereitzustellen.

Bevorzugte neue thermotrope vollaromatische Polyester sollten unterhalb einer Temperatur von 400 °C, bevorzugt unterhalb einer Temperatur von 370 °C und besonders bevorzugt unterhalb einer Temperatur von 340 °C thermoplastisch verarbeitbar sein.

Die Wärmeformbeständigkeit (ohne thermische Nachbehandlung) sollte in der Regel mindestens 160 °C, vorzugsweise mindestens 180 °C und insbesondere mindestens 200 °C (jeweils gemessen nach Vicat B, DIN 53 460, ISO 360) betragen.

Überraschenderweise wurde nun gefunden, daß vorwiegend aus 3,4'-Benzophenondicarbonsäure und bestimmten unsubstituierten Diphenolen aufgebaute vollaromatische Polyester die gewünschte Kombination vorteilhafte Eigenschaften aufweisen.

Gegenstand der vorliegenden Erfindung sind thermotrope aromatische Polyester mit wiederkehrenden Einheiten der Formeln

$$-\overset{O}{\overset{\|}{C}}-Ar^1-\overset{O}{\overset{\|}{C}}- \quad (I)$$

und

$$—O—Ar^2—O— \quad (II)$$

worin

$Ar^1$ zu 80 bis 100 Mol- % aus Resten der Formel

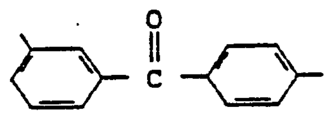

(III)

und zu 20 bis 0 Mol- % aus anderen 6 bis 18 C-Atome enthaltenden bivalenten aromatischen Resten, deren kettenverlängernde Bindungen coaxial oder parallel entgegengesetzt sind, besteht, und

$Ar^2$ zu 50 bis 80, Mol- % aus einem 1,4-Phenylenrest und zu 50 bis 20, Mol- % aus anderen 6 bis 18 C-Atome enthalten den bivalenten aromatischen Resten, deren kettenverlängernde Bindungen zu mindestens 80 Mol- % coaxial oder parallel entgegengesetzt und zu höchstens 20 Mol- % gewinkelt sind,

besteht, mit der Maßgabe, daß das Molverhältnis I/II 0,95-1,05, vorzugsweise 0,98-1,02 und insbesondere 1,0 beträgt.

Bei der Verwendung von Resten $Ar^1$, die von dem Rest der Formel III verschieden sind, wird man darauf achten, daß die Temperatur, bei der die resultierenden Polyester thermoplastisch verarbeitbar sind, nicht über 400 °C, vorzugsweise nicht über 370 °C, insbesondere nicht über 340 °C steigt.

Bei der Verwendung von Diphenolen, die zu Resten $Ar^2$ führen, deren kettenverlängernde Bindungen gewinkelt sind, wird man eine Menge nicht überschreiten, die die thermotropen Eigenschaften der resultierenden Polyester verlorengehen läßt.

Bevorzugte Dicarbonsäuren, die zu Einheiten I führen, die nicht von Struktur III abgeleitet sind, sind beispielsweise 4,4 '-Biphenyldicarbonsäure, 4,4 '-Terphenyldicarbonsäure, 4,4 '-Tolandicarbonsäure, 4,4 '-Stilbendicarbonsäure, 4,4 '-Azobenzoldicarbonsäure, 1,4-, 1,5-sowie 2,6-Naphthalindicarbonsäure. Besonders bevorzugt ist Terephthalsäure.

Bevorzugte Diphenole, die zu Einheiten II führen, die nicht von einem 1,4-Phenylenrest abgeleitet sind, sind beispielsweise 4,4 '-Dihydroxydiphenyl, 1,4-, 1,5- und 2,6-Naphthalindiol, Resorcin, 4,4 '-Dihydroxydiphenylether, 4,4 '-Dihydroxydiphenylsulfon, 4,4 '-Dihydroxydiphenylketon sowie 4,4 '-Dihydroxydiphenylsulfid, 4,4 '-Dihydroxydiphenyl wird besonders bevorzugt.

Die erfindungsgemäßen Polyester können bis zu 10 Mol- % Carbonatgruppen, bezogen auf die Summe von Ester- und Carbonatgruppen, enthalten, sind jedoch vorzugsweise frei von Carbonatgruppen.

Als Endgruppen können die erfindungsgemäßen Polyester —COOH, —H, —OH, $—OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol und aromatische Monocarbonsäuren, wie Diphenylcarbonsäuren und Napthalincarbonsäuren. Kettenabbrecher können in Mengen von 0,5-5 Mol- %, bei Carbonsäuren bezogen auf die Reste I, bei Phenolen bezogen auf die Reste II, eingesetzt werden.

Es können auch verzweigende drei- oder höherfunktionelle — vorzugsweise aromatische — Monomere in Mengen von 0,1-1 Mol- %, bezogen auf die Summe der Reste I und II, wie z.B. Phloroglucin, 1,3,5,-Benzoltricarbonsäure und 3,5-Dihydroxybenzoesäure, eingesetzt werden.

Die erfindungsgemäßen Polyester besitzen in fer Regel eine inhärente Viskosität von mindestens 0,5, vorzugsweise von mindestens 1,0 dl/g (gemessen an einer Lösung von 5 mg Polyester/ml p-Chlorphenol bei 45 °C). Sollten Polyester in p-Chlorphenol unlöslich sein, wird angenommen, daß sie die angegebene Mindestviskosität besitzen ; sie sind somit erfindungsgemäß, sofern sie den Parametern des Hauptanspruches genügen.

Die erfindungsgemäßen Polyester besitzen vorzugsweise eine Schmelzviskosität von weniger als 1000 Pa.s, gemessen bei einer Schergeschwindigkeit von $10^3$ $s^{-1}$ unter Verwendung einer Düse mit einem Länge/Durchmesser-Verhältnis von 20 bei einer Temperatur von weniger als 400 °C, vorzugsweise weniger als 370 °C.

Die erfindungsgemäßen Polyester können nach verschiedenen Verfahren hergestellt werden, z. B. durch Kondensation bzw. Umesterung der von den Resten I und II abgeleiteten Dicarbonsäuren und Diphenole oder ihrer reaktionsfähigen Derivate und anschließende Polykondensation.

Beispiele für bevorzugte Carbonsäure-Ausgangsverbindungen sind ihre Arylester, ihre Acylester und

ihre Säurechloride.

Nach einem bevorzugten Syntheseverfahren werden die Arylester, vorzugsweise die Phenylester, der von den Resten I abgeleiteten Dicarbonsäuren mit von den Resten II abgeleiteten Diphenolen umgesetzt, wobei die Phenylester auch in situ hergestellt werden können.

Die Reste I und II werden im Verhältnis der Ausgangskomponenten in den Polyester eingebaut.

Es kann zweckmäßig sein, sowohl die Kondensations- bzw. Umesterungsreaktionen als auch die Polykondensations-reaktionen katalytisch zu beschleunigen. Derartige Katalysatoren sind bekanntlich z. B. Lewis-Säuren und Halogenwasserstoffsäuren ; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z. B. Magnesium, Calcium ; der Nebengruppenelemente, wie z. B. Vanadium, Titan, Mangan, Cobalt, Nickel, Zink, Lanthan, Cer, Zirkonium oder der Elemente aus anderen Gruppen des Perioden-systems, wie z. B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Di-butyl-zinn-diacetat, Dibutyl-dimethoxy-zinn.

Die Katalysatormengen betragen vorzugsweise 0,001-1, insbesondere 0,01-0,2 Gew.-%, bezogen auf das Gesamtgewicht der eingesetzten Monomeren.

Die erfindungsgemäßen Polyester können bei Temperaturen von 150 bis 380 °C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann — vorzugsweise in Granulatform — einer Festphasennachkondensation unter vermindertem Druck bei Temperaturen von 200 bis 300 °C unterworfen werden ; nach 1 bis 25 Stunden haben sich das Molekulargewicht erhöht und die daraus resultierenden Eigenschaften des Polyesters merklich verbessert.

Weiterer Gegenstand der Erfindung ist also ein Verfahren zur Herstellung der neuen Polyester durch Umsetzung der von den Resten I und II abgeleiteten Dicarbonsäuren und Diphenole bzw. ihrer reaktionsfähigen Derivate, die auch in situ hergestellt werden können, gegebenenfalls in Gegenwart von Katalysatoren, Kettenabbrechern und Verzweigungsmitteln, bei Temperaturen von 150 bis 380 °C, gegebenenfalls unter vermindertem Druck.

Die erfindungsgemäßen thermotropen Polyester können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Des weiteren zeigen sie eine ausgeprägte Strukturviskosität, d. h., daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hervorragender Steifigkeit und Festigkeit, sehr hoher Wärmeformbeständigkeit und großer Dimensionsstabilität hergestellt werden. Da die Polyester außerordentlich chemikalienresistent und flammwidrig sind, eignen sie sich bevorzugt zur Herstellung von

— elektrotechnischen Artikeln, wie z. B. Isolatoren, gedruckten Schaltungen, Steckkontakten, Armaturenteilen,

— Teilen chemisch-technischer Apparate, wie z. B. Rohren, Behälterauskleidungen, Rotoren, Gleitlagern, Dichtungen,

— Teilen der Flugzeuginnenausstattung,

— Teilen medizinisch-technischer Geräte, wie z. B. Bauteilen von Klimaanlagen, Ventilteilen.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5-65 Gew.-%, bezogen auf verstärkte bzw. gefüllte Formmasse, sind sie bestens geeignet.

Weiterer Gegenstand der Erfindung ist also die Verwendung der neuen Polyester zur Herstellung von Formkörpern, Filamenten, Fasern und Folien.

## Beispiele

Die Prüfung der Schlagzähigkeit $a_n$ und Kerbschlagzähigkeit $a_k$ erfolgte an Normkleinstäben gemäß DIN 53 453 (ISO/R 179) bei 23 °C jeweils an 10 Prüfkörpern. Die Bestimmung der Biegefestigkeit wurde an Normkleinstäben gemäß DIN 53 452 (ISO/R 178) durchgeführt. Zug-E-Modul und Biege-E-Modul wurden gemäß DIN 53 457 ermittelt. Die Messung der Wärmeformbeständigkeit erfolgte durch Bestimmung der Vicat-B-Erweichungstemperatur gemäß DIN 53 460 (ISO/R 306).

Beispiel 1

In ein mit Stickstoff gespültes und ausgeheiztes 1-1-Planschliffgefäß mit Planschliffdeckel, Rührer, Stickstoffeinleitung und Destillationsaufsatz wurden folgende Substanzen eingewogen :

0,59 Mol = 249,0 g 3,4 '-Benzophenondicarbonsäurediphenylester,
0,41 Mol = 45,5 g Hydrochinon,
0,18 Mol = 32,9 g 4,4 '-Dihydroxydiphenyl und 0,2 g Titantetraisopropylatlösung in Chlorbenzol (1 gew.- %ig).

Unter leichtem Stickstoffstrom wurde die Reaktionsmischung mittels Salzbad bei 250 °C aufgeschmolzen und durch Erhöhung der Temperatur auf 290 °C und Absenkung des Druckes auf 500 mbar die Phenolabspaltung in Gang gesetzt. Über einen Zeitraum von 4 Stunden wurde durch allmähliche Erhöhung der Temperatur auf 360 °C und Verringerung des Druckes auf 15 mbar Phenol abdestilliert, wobei sich die zunächsiklare Schmelze eintrübte. Durch weitere Erniedrigung des Druckes bis auf 0,5 mbar wurde die Phenolabspaltung innerhalb von 20 Minuten zu Ende geführt.

Der erhaltene Polyester wurde gemahlen und bei 240 °C einer Festphasennachkondensation unterworfen (15 Stunden bei einem Druck von 1 mbar). Die inhärente Viskosität des so erhaltenen hellbeigen Polyesters betrug 1,3 dl/g. Im Bereich von 300 bis 400 °C wurde eine optisch anisotrope Schmalzphase beobachtet.

Die thermogravimetrische Analyse ergab einen Gewichtsverlust von 0,2 % bei einer Belastungszeit von 30 min und einer Temperatur von 350 °C.

Beispiel 2-6

Zur Herstellung der in Tabelle 1 aufgelisteten Polyester wurde die in Beispiel 1 beschriebene Reaktionsapparatur und das dort beschriebene Verfahren verwendet.

Tabelle 1

| Beispiel | 3,4'-BDC (Mol) | Hy (Mol) | DOD (Mol) | 2,6-ND (Mol) | inhärente Viskosität (dl/g) | anisotrope Phase (°C) |
|---|---|---|---|---|---|---|
| 2 | 0,59 | 0,47 | 0,12 | - | 1,4 | 310 - 400 |
| 3 | 0,59 | 0,35 | 0,24 | - | 1,3 | 290 - 400 |
| 4 | 0,59 | 0,30 | 0,29 | - | 1,5 | 295 - 400 |
| 5 | 0,59 | 0,12 | 0,47 | - | 1,4 | 305 - 400 |
| 6 | 0,59 | 0,47 | - | 0,12 | 1,2 | 305 - 400 |

3,4 '-BDC = 3,4 '-Benzophenondicarbonsäure
Hy = Hydrochinon
DOD = 4,4 '-Dihydroxydiphenyl
2,6-ND = 2,6-Naphthalindiol

Zur Prüfung der mechanischen Eigenschaften wurden aus den Polyestern der Beispiele 1-6 durch Spritzguß Normkleinstäbe und Zugstäbe hergestellt. Die Verarbeitung der Polyester erfolgte bei Temperaturen zwischen 310 und 370 °C. In Tabelle 2 sind die gemessenen Werte aufgeführt.

(Siehe Tabelle 2 Seite 6 f.)

Tabelle 2

| Beispiel | Vicat B (°C) | $a_n$ / $a_k$ (kJ/m²) | Biegefestigkeit (MPa) | Biege-E-Modul (MPa) | Zug-E-Modul (MPa) |
|---|---|---|---|---|---|
| 1 | 191 | 25 / 13 | 207 | 10 100 | 22 600 |
| 2 | 203 | 22 / 9 | 215 | 11 300 | 21 300 |
| 3 | 180 | 32 / 17 | 201 | 10 700 | 19 200 |
| 4 | 184 | 29 / 18 | 221 | 9 800 | 19 800 |
| 5 | 201 | 19 / 11 | 214 | 12 800 | 23 100 |
| 6 | 197 | 17 / 7 | 195 | 10 500 | 19 100 |

## Patentansprüche

1. Thermotrope Polyester mit wiederkehrenden Einheiten der Formeln

$$-\overset{\overset{O}{\|}}{C}-Ar^1-\overset{\overset{O}{\|}}{C}- \qquad (I)$$

und

$$-O-Ar^2-O- \qquad (II)$$

worin

$Ar^1$ zu 80 bis 100 Mol-% aus Resten der Formel

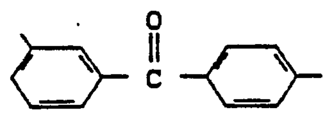

(III)

und zu 20 bis 0 Mol-% aus anderen 6 bis 18 C-Atomen enthaltenden bivalenten aromatischen Resten, deren kettenverlängernde Bindungen coaxial oder parallel entgegengesetzt sind, besteht,
und

$Ar^2$ zu 50 bis 80 Mol-% aus einem 1.4-Phenylenrest und zu 50 bis 20 Mol-% aus anderen 6 bis 18 C-Atome enthaltenden bivalenten aromatischen Resten, deren ketterverlängernde Bindungen zu mindestens 80 Mol-% coaxial oder parallel entgegengesetzt und zu höchstens 20 Mol-% gewinkelt sind, besteht, mit der Maßgabe, daß das Molverhältnis I/II 0,95 bis 1,05 beträgt.

2. Polyester nach Ansprüchen 1 und 2, dadurch gekennzeichnet, daß die Reste II ausschließlich aromatische Einheiten mit parallel oder coaxial entgegengerichteten kettenverlängernden Bindungen darstellen.

3. Polyester nach Ansprüchen 1 bis 3, dadurch gekennzeichnet, daß $Ar^1$ ausschließlich der Formel III entspricht.

4. Polyester nach Ansprüchen 1 bis 4, dadurch gekennzeichnet, daß $Ar^2$ ausschließlich 1,4-Phenylenresten und 4,4'-Biphenylenresten in Molverhältnissen von 9 : 1 bis 0 : 10 entspricht.

5. Verfahren zur Herstellung der Polyester nach Ansprüchen 1 bis 5, durch Umsetzung der von den Resten I und II abgeleiteten Dicarbonsäuren und Diphenole bzw. ihrer reaktionsfähigen Derivate, die auch in situ hergestellt werden können, ggf. in Gegenwart von Kettenabbrechern, Verzweigungsmitteln und Katalysatoren, bei Temperaturen von 150-380 °C, ggf. unter vermindertem Druck.

6. Verfahren nach Anspruch 6, dadurch gekennzeichnet, daß sich eine Festphasennachkondensation anschließt.

7. Verwendung der Polyester nach Ansprüchen 1 bis 5 zur Herstellung von Formkörpern, Filamenten, Fasern und Folien.

## Claims

1. Thermotropic polyesters having recurrent units corresponding to the following formulae :

$$-\overset{\overset{O}{\|}}{C}-Ar^1-\overset{\overset{O}{\|}}{C}- \qquad (I)$$

and

$$O-Ar_2-O- \qquad (II)$$

wherein

$Ar^1$ consists to an extent of 80 to 100 mol % of groups corresponding to the following formula :

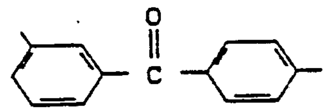

(III)

and an extent of 20 to 0 mol % of other bivalent aromatic groups containing 6 to 18 carbon atoms in which the chain lengthening bonds are arranged coaxially or parallel in opposite directions, and

$Ar^2$ consists to an extent of 50 to 80 mol % of a 1,4-phenylene group and to an extent of 50 to 20 mol % of other bivalent aromatic groups containing 6 to 18 carbon atoms, in which at least 80 mol % of the chain lengthening bonds are arranged coaxially or parallel in opposite directions and not more than 20 mol % of the chain lengthening bonds are angled, under the condition that the molar ratio of I/II is from 0.95 to 1.05.

2. Polyester according to Claim 1, characterised in that the groups II consist exclusively of aromatic units having chain lengthening bonds arranged in parallel or coaxially in opposite directions.

3. Polyesters according to Claims 1 to 2, characterised in that $Ar^1$ corresponds exclusively to formula III.

4. Polyesters according to Claims 1 to 3, characterised in that $Ar^2$ consists exclusively of 1,4-phenylene groups and 4,4′-biphenylene groups in molar ratios of from 9 :1 to 0 :10.

5. A process for the preparation of the polyesters according to Claims 1 to 4 by the reaction of the dicarboxylic acids and diphenols derived from the groups I and II or reactive derivatives thereof, which may also be prepared in situ, at temperatures from 150 to 380 °C, optionally at reduced pressure and optionally in the presence of chain terminating agents, branching agents and catalysts.

6. A process according to Claim 5, characterised in that it is followed by a solid phase after-condensation.

7. Use of the polyesters according to Claims 1 to 4 for the production of moulded articles, filaments, fibres and films.

**Revendications**

1. Polyesters thermotropes comportant des motifs récurrents répondant aux formules :

$$-\overset{O}{\overset{\|}{C}}-Ar^1-\overset{O}{\overset{\|}{C}}- \quad (I)$$

et

$$-O-Ar^2-O- \quad (II)$$

dans lesquelles

$Ar^1$ consiste, pour 80 à 100 mol %, en des restes de formule

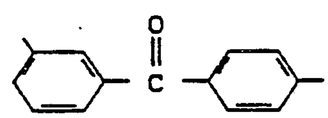

(III)

et pour 20 à 0 mol % en d'autres restes aromatiques bivalents contenant 6 à 18 atomes de carbone, dont les liaisons d'allongement des chaînes sont coaxiales ou opposées et parallèles,
et

$Ar^2$ consiste pour 50 à 80 mol % en un reste 1,4-phénylène et pour 50 à 20 mol % en d'autres restes aromatiques bivalents contenant 6 à 18 atomes de carbone, dont les liaisons d'allongement des chaînes sont pour au moins 80 mol % coaxiales ou opposées parallèlement et pour 20 mol % au maximum sont inclinées.

2. Polyesters selon la revendication 1, caractérisés en ce que les restes II sont des motifs exclusivement aromatiques comportant des liaisons d'allongement des chaînes parallèles ou opposées coaxialement.

3. Polyesters selon l'une des revendications 1 ou 2, caractérisés en ce que $Ar^1$ répond exclusivement à la formule III.

4. Polyesters selon les revendications 1 à 3, caractérisés en ce que $Ar^2$ est constitué exclusivement par des restes 1,4-phénylène et par des restes 4,4′-biphénylène, selon des rapports molaires de 9 : 1 à 0 : 10.

5. Procédé de préparation des polyesters selon les revendications 1 à 4, par réaction des acides dicarboxyliques et des diphénols dérivant des restes I et II, ou de leurs dérivés réactifs, qui peuvent également être préparés sur place (« in situ »), en opérant éventuellement en présence d'agents de rupture des chaînes, d'agents de ramifications et de catalyseurs, à des températures de 150 à 380 °C, éventuellement sous pression réduite.

6. Procédé selon la revendication 5, caractérisé en ce qu'on effectue ensuite une post-condensation en phase solide.

7. Utilisation des polyesters selon les revendications 1 à 4 pour la production d'objets moulés ou façonnés, de filaments, de fibres et de feuilles.